# EUROPÄISCHE PATENTSCHRIFT

(11) **EP 3 300 572 B1**
(45) Veröffentlichungstag und Bekanntmachung des Hinweises auf die Patenterteilung: **05.08.2020**
(21) Anmeldenummer: 17001101.9
(22) Anmeldetag: 28.06.2017
(51) Int. Cl.: A01D 34/37

(54) **SCHNEIDWERK FÜR EINE LANDWIRTSCHAFTLICHE ERNTEMASCHINE**
CUTTING ASSEMBLY FOR AN AGRICULTURAL HARVESTER
BARRE DE COUPE DE MOISSONNEUSE

(30) Priorität: 29.09.2016 DE 102016118528
(43) Veröffentlichungstag der Anmeldung: 04.04.2018
(73) Patentinhaber: CLAAS Selbstfahrende Erntemaschinen GmbH, 33428 Harsewinkel (DE)
(72) Erfinder: Fischer, Frédéric, 59823 Arnsberg (DE); Neltemeier, Dennis, 59510 Lippetal (DE); Sprigade, Daniel, 59427 Unna (DE); Heymann, Philipp, 59519 Möhnesee Wamel (DE); Kettelholt, Boris, 33335 Gütersloh (DE)
(74) Vertreter: CLAAS Gruppe

(56) Entgegenhaltungen:
- DE-A1-102014 010 684

## Beschreibung

Die vorliegende Erfindung betrifft eine selbstfahrende Erntemaschine mit einem Schneidwerk gemäß dem Oberbegriff des Anspruchs 1. Eine derartige Erntemaschine ist z.B. aus dem Dokument DE 10 2014 010 684 A1 bekannt.

Aus der Praxis sind als Mähdrescher ausgebildete selbstfahrende Erntemaschinen mit auf das Jeweillge Erntegut abgestimmten Schneidwerken hinlänglich bekannt. Schneidwerke weisen häufig oszillierende Messerbalken auf, welche mechanisch angetrieben werden. Die Wartung von den Messerbalken beinhaltet unter anderem ein Austauschen von stumpfen oder beschädigten Messern. Dieser Austausch erfordert häufig ein Verschieben der Messerreihe, um die Messer für ein einfache Demontage und Montage zu positionieren.

Die Druckschrift DE 1 247 731, beschreibt dazu ein Schneidwerk mit einer mechanischen Antriebsvorrichtung für den Messerbalken, sodass dieser eine lineare Schnittbewegung ausführt. Der Messerbalken weist Messer, Gegenschneiden und Niederhalter auf. Die Messer durchqueren bei ihrer linearen Schnittbewegung eine Aussparung zwischen den Niederhaltern und den Gegenschneiden. Nachteilig ist hier, dass die Messer nach dem Abschalten des Schneidwerks mit hoher Wahrscheinlichkeit innerhalb der Aussparung der Fingerelemente positioniert sind, weshalb die Messer häufig manuell repositioniert werden müssen, um sie auszutauschen. Durch die mechanische Antriebsanbindung und die heutige Größe von Schneidwerken ist ein manuelles Bewegen der Messerbalken jedoch erschwert.

Aufgabe der Erfindung Ist es, die beschriebenen Nachteile des Standes der Technik zu beheben und insbesondere eine selbstfahrende Erntemaschine mit einem Schneidwerk zu schaffen, bei der ein Austausch von Messern vereinfacht ist.
Die Aufgabe wird gelöst mit einem Schneidwerk mit den Merkmalen des unabhängigen Patentanspruchs 1. Vorteilhafte Ausführungsformen sind den abhängigen Ansprüchen entnehmbar.

Indem eine selbstfahrende Erntemaschine mit einem angeordnetem Schneidwerk und einer Steuer- und Regeleinheit, wobei das Schneidwerk einen Messerbalken zum Abtrennen von Pflanzen aufweist, wobei Jeder Messerbalken mindestens eine Messerleiste mit Messern aufweist, und die mindestens eine Messerleiste mittels eines elektrischen Antriebes angetrieben wird, so dass die Messerleiste linear oszilliert, wobei die Steuer- und Regeleinheit dazu eingerichtet ist, die mindestens eine Messerleiste mittels des elektrischen Antriebes in mindestens eine Wartungsposition zu verschieben, in der die Messer austauschbar sind, wird sichergestellt, dass die Messer sich in einer günstigen Position für eine Montage oder Demontage der Messer befinden. Insbesondere Ist dadurch kein manuelles Bewegen des Messerbalkens mehr erforderlich. Der elektrische Antrieb ermöglicht ein präzises Positionieren des Messerbalkens, Zudem erfordert die Positionierung des Messerbalkens bei einem in der Regel vorhandenem Stromspeicher nicht den Betrieb eines Fahrzeugmotors. Das heißt, dass ein Positionieren der Messerbalken auch bei ausgeschalteter Erntemaschine erfolgen kann, was den Austausch der Messer weiter vereinfacht.

In einer bevorzugten Ausgestaltung ist die selbstfahrende Erntemaschine ein Mähdrescher und der elektrische Antrieb ein Linearantrieb. Insbesondere beim Messerbalken des Schneidwerkes des Mähdreschers ist eine erfindungsgemäße Verschiebung der Messerleiste vorteilhaft, da die Schneidwerke von Mähdreschers stetig breiter werden. Der Linearantrieb hat insbesondere den Vorteil, dass kein Getriebe notwendig ist, um zum Beispiel rotatorische Antriebskräfte in lineare Antriebskräfte für eine lineare Oszillation der Messerleiste umzuwandeln. Dies reduziert die Vibrationen im Schneidwerk. Durch Anordnung von mindestens zwei Linearantrieben am Messerbalken können die Schwingungen weiter reduziert werden.

In einer weiteren bevorzugten Ausgestaltung weist das Schneidwerk ein Sensorsystem zur Bestimmung einer Position und/oder einer Weges der Messerieiste auf. Damit kann zum einen eine Oszillationsfrequenz der Messerleiste detektlert werden. Zum anderen kann damit die Jeweilige Wartungsposition präzise angesteuert werden.

In einer weiteren bevorzugten Ausgestaltung umfasst das Sensorsystem mindestens einen Induktivsensor, einen fotoelektrischen Abtastsensor und/oder einen magneto-elektrischen Abtastsensor. Dadurch kann die Position und/oder der Weg der Messerleiste robust, kostengünstig und präzise detektiert werden.

Damit auch die Beschieunigung der Messerleiste bei der Einstellung der Wartungsposition von der Steuer- und Regeleinheit einbezogen werden kann, Ist In einer vorteilhaften Ausgestaltung der Erfindung vorgesehen, dass das Schneidwerk ein Sensorsystem zur Bestimmung der Beschleunigung der Messerleiste aufweist.

Auf technisch einfache Weise lässt sich eine Steuerung der Wartungspositionen derart bewirken, wenn das Schneidwerk ein Schalterelement zur Aktivierung der mindestens einen Wartungsposition aufweist. Dadurch kann die Messerleiste bei einer visuellen Kontrolle direkt in eine Wartungsposition verstellt werden, ohne dass man In eine Fahrzeugkabine einsteigen muss.

Indem der Linearantrieb beidseitig Rückstellfedern aufweist, und der Linearantrieb derart an der Messerleiste angeordnet ist, dass bei abgeschaltetem Linearantrieb, der Läufer die Wartungsposition einnimmt, in der die Messer austauschbar sind, wird sichergestellt, dass bei Abschaltung des Linearantriebes die Wartungsposition auf einfache technische Welse stets vorliegt. Ein weiteres Verschieben der Messerleiste ist dann nicht mehr erforderlich. Der Austausch der Messer Ist somit weiter vereinfacht.

Die vorliegende Erfindung wird nachstehend anhand von in den Zeichnungen dargestellten Ausführungsbeispielen näher erläutert. Es zeigen:
- Fig. 1: eine schematische Draufsicht auf einen Ausschnitt eines Schneidwerks mit einem unter einem Schneidtisch angebrachten elektrischen Antrieb;
- Fig. 2: eine schematische Ansicht einer Ausgestaiungsform eines Linearantriebes, und zwar in (a) als schematischen Querschnitt und in (b) als elektronisches Schaltbild;
- Fig. 3: eine Ausgestaltungsformen eines Messerbalken in zwei Stellungen; und zwar in (a) in einer begrenzt zugänglichen Stellung und in (b) in einer möglichen Wartungsposition.

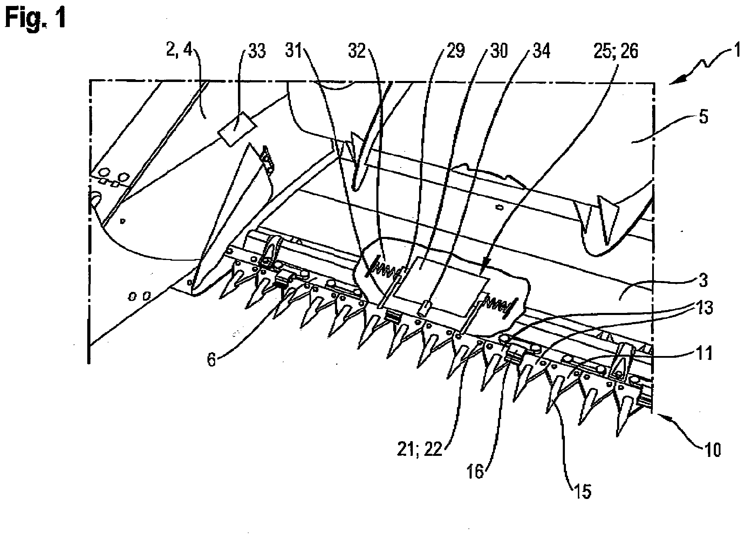

Fig. 1 zeigt eine schematische Draufsicht auf einen Ausschnitt eines Schneidwerks 1 von an sich bekannter Bauart für einen Mähdrescher, einen Feldhäcksler oder eine andere selbstfahrende Erntemaschine. Ein Trägerrahmen 2 des Schneidwerks 1 umfasst einen im Wesentlichen horizontalen Schneidtisch 3 und vertikale Seltenwangen 4 an einem linken (dargestellt) und rechten Rand (nicht dargestellt) des Schneidtisches 3. Zwischen beiden Seitenwangen 4 ist eine Querförderschnecke 5 angeordnet. Entlang der Vorderkante des Schneidtisches 3 ist ein Messerbalken 10 angeordnet.

Der Messerbalken 10 weist mindestens eine Messerleiste 11 auf. Die Messerleiste 11 umfasst in einer Reihe angeordnete Messer 13. Jedes Messer 13 Ist im vorliegenden Beispiel dreieckig ausgeformt und weist an beiden Seiten Schnittkanten auf. Des Weiteren weist der Messerbalken 10 bevorzugt Gegenschneiden 15 auf. Die Gegenschneiden 15 sind Im vorliegenden Beispiel statisch. Sie können stumpf sein oder Schnittkanten aufweisen. Des Weiteren dienen die Gegenschneiden 15 häufig als ein zusätzliches Stützmittel der Messer 13. Die Messer oszillieren durch oder entlang der Gegenschneiden. Die Gegenschneiden 15 können auf einer Unterseite der Messer 13 einer Oberseite der Messer 13 oder auf beiden Seiten der Messer 13 angeordnet sein. Im hier vorliegenden Beispiel sind die Gegenschneiden 15 beidseitig, auf der Ober und Unterseite der Messer 13, angeordnet. Sie umschließen die Messer 13 ganz oder teilweise. Jede Gegenschneide 15 weist dann eine Aussparung auf, durch welche die Messer 13 bewegbar sind.

Es liegt im Rahmen der Erfindung, andere Messerbalken 10 zu verwenden. Alternativ können die Gegenschneiden 15 als eine zur Messerleiste 11 gegenläufige weitere Messerleiste 11 in einem Doppelschneidwerk ausgebildet sein (nicht dargesteilt).

Des Weiteren weist der Messerbalken 10 vorzugsweise Niederhalter 16 auf, wodurch eine Neigung und Spurführung der Messer 13 kontrolliert wird. Der Jeweilige Niederhalter 16 wirkt mit der korrespondierend angeordneten Gegenschneide 15 vorzugsweise in der Weise zusammen, dass mittels des Niederhalters 16 ein Spaltmaß zwischen diesen vorgebbar Ist, um eine exakte Schnittbewegung zwischen den Messern 13 und den Gegenschneiden 15 zu erreichen. Es liegt im Rahmen der Erfindung, dass eine obere Gegenschneide 15 gleichzeitig als Niederhalter 16 fungieren kann.
Jede Messerleiste 11 weist vorzugsweise eine Schiene (nicht dargestellt) auf, an der Messer 13 angeordnet sind. Die Messer 13 sind an der Schiene reversibel befestigt. Vorzugsweise weisen die Messer 13 mindestens Befestigungsvorrichtungen 21 auf, mit denen Sie an der Schiene befestigt sind. Bevorzugt sind die Messer 13 mittels, vorzugsweise zweier, Schraubverbindung 22 an die Schiene geschraubt. Alternativ können die Messer 13 an die Schiene genietet sein.
Die Messerleisten 11 sind horizontal verschiebbar Im Messerbalken 10 montiert. Im hier betrachteten Fall sind zwei Messerleisten 11 vorgesehen, von denen jedes eine Hälfte der Arbeitsbreite des Schneidwerks 1 einnimmt und die spiegelbildlich zueinander angetrieben sind, so dass ihr gemeinsamer Schwerpunkt in Ruhe bleibt und keine Querschwingungen des Schneidwerks 1 als Ganzes angeregt werden.

Das Schneidwerk 1 weist mindestens einen elektrischen Antrieb 25 auf. Vorzugsweise Ist an jeder Messerleiste 11 ein elektrischer Antrieb 25 angeordnet. Der elektrische Antrieb 25 treibt die jeweilige Messerleiste 11 an, wodurch die Messerleiste 11 vorzugsweise entlang der Vorderkante 6 des Schneidtisches 3 linear oszilliert. Bevorzugt ist der elektrische Antrieb 25 als Linearantrieb 26 ausgebildet. Vorzugsweise ist er unterhalb des Schneidtisches 3 angeordnet. Bevorzugt umfasst der Linearantrieb 26 einen Läufer 29 und einen Stator 30. Es ist ebenfalls denkbar, den elektrischen Antrieb 25 als Rotationantrieb auszubilden. In diesem Ausführungsbeispiel Ist der Läufer 29 des Linearantriebs 26 mittels Beschlägen 31 an der Messerleiste 11 befestigt. Alternativ kann der Läufer 29 auch in der Messerleiste 11, zum Beispiel In der Schiene, integriert sein. Des Weiteren sind vorzugsweise beidseitig am Läufer 29 Rückstellfedern 32 angebracht. Die Rückstellfedern 32 dienen der Unterstützung der Oszillation des Läufers 29 und/oder der Messerleisten 11. Sie begrenzen zudem die Oszillationsamplitude des Läufers 29 in beiden Osziliationsrichtungen. Sie können als Schraubenfedern, Blattfedern oder andere Federtypen oder Dämpfungssysteme ausgebildet sein.

Die selbstfahrende Erntemaschine und/oder das Schneidwerk 3 weistzudem eine Steuer- und Regeleinheit 33 auf, die dazu eingerichtet Ist, den elektrischen Antrieb 25 zu steuern. Sie Ist zudem vorzugsweise dazu eingerichtet, die Position der Messerleiste 11 mittels des elektrischen Antriebes 26 einzusteilen,

Dazu weist das Schneidwerk 3 vorzugsweise mindestens ein Sensorsystem 34 auf, dass dazu eingerichtet Ist, eine Position und/oder eine Wegstrecke der Messerleiste 11 zu messen. Alternativ oder zusätzlich ist das mindestens eine Sensorsystem 34 vorzugsweise dazu eingerichtet, die Position und/oder eine Wegstrecke des Läufers 29 zu detektieren. Alternativ ist das Sensorsystem 34 dazu eingerichtet, die Position und/oder die Wegstrecke der an die Messerleiste 11 angeordneten mitoszillierenden Bauteile zu detektieren. Vorzugsweise ist das Sensorsystem 34 dazu in dem elektrischen Antrieb 25 integriert und/oder als ein separates Sensorsystem 34 am Schneidwerk 1 ausgebildet. Vorzugsweise ist das mindestens eine Sensorsystem 34 als ein Induktivsensor ausgebildet. Vorzugsweise Ist der Induktivsensor als LVDT-Sensor (Linear-Variable-Differential-Transformer) ausgestaltet. Alternativ ist es denkbar, dass der Induktive Sensor als ein Wirbeistrom-Induktivsensor, Induktiver Sensor mit variabler Reluktanz, Variabler Transformator, und/oder M-in-Track/R-In-Trac Sagentia Sensor ausgebildet ist. Alternativ oder zusätzlich ist das Sensorsystem 34 bevorzugt als fotoelektrischer Abtastsensor ausgebildet. Vorzugsweise erfolgt die Messung dabei mittels einer Maßverkörperung, zum Beispiel in Form einer Abtastplatte, weiche zum Beispiel am Läufer 29 und/oder an der Messerleiste 11 angeordnet ist. Weiterhin bevorzugt Ist das Sensorsystem 34 als magnetoelektrischer Abtastsensor ausgebildet. Vorzugsweise erfolgt die Messung dabei mittels einer magnetisch codierten Maßverkörperung, weiche am Läufer 29 und/oder an der Messerleiste 11 angeordnet Ist.

Weiterhin bevorzugt weist das Schneidwerk 3 ein Sensorsystem 34 zur Bestimmung einer Beschleunigung der Messerleiste 11 auf.

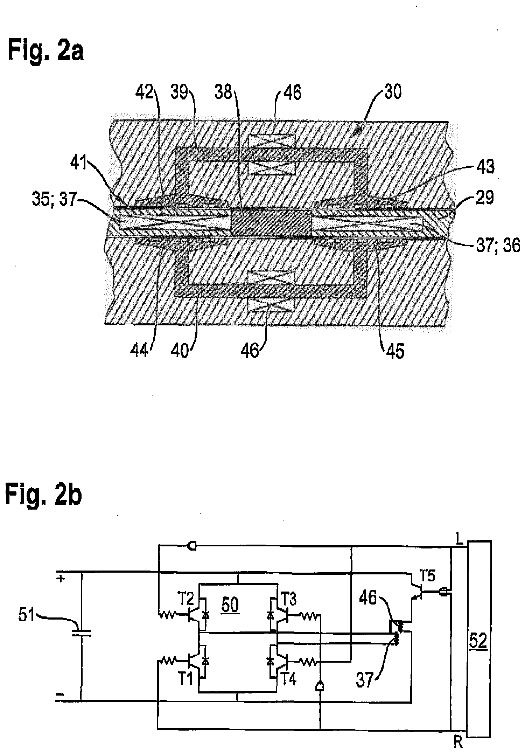

Fig. 2 zeigt eine schematische Ansicht einer Ausgestaltungsform des Linearantriebes, und zwar in (a) als schematischen Querschnitt entlang einer vertikalen Schnittebene und in (b) als elektronisches Schaltbild. Es Ilegt Im Rahmen der Erfindung, andersartig aufgebaute elektrische Antriebe 25, Insbesondere andersartig aufgebaute Linearantriebe 26, zu verwenden, um die Messerleiste 11 anzutreiben.

Der Linearantrieb 26 weist einen Aufbau gemäß DE 102014 010 684 auf, sodass Im Folgenden ledlglich eine mögliche Ausgestaltungsform des Linearantriebes 26 mit seiner elektrischen Schaltung beschrleben wird. Jeder Linearantrieb 26 weist bevorzugt einen Läufer 29 und einen Stator 30 auf. Der Läufer 29 und der Stator 30 sind als Magneten ausgeführt, wobei mindestens einer als ein Elektromagnet ausgebildet Ist. Der übrige kann als Elektromagnet oder als alternierend angeordnete gepolte Reihung von Permanentmagneten ausgebildet sein. Bevorzugt sind der Läufer 29 und der Stator 30 als Elektromagneten ausgebildet. Bevorzugt weist der Läufer 29 eine Spule 37 auf, die einen Eisenkern 38 umschließt. Die Spule 37 weist dabei bevorzugt stromdurchflossende Leitungsadern 35,36 linke und rechts des Eisenkerns 38 auf. Der Stator 30 umfasst vorzugsweise über und unter dem Läufer 29 angeordnete Magnetjoche 39,40. Die Magnetjoche 39,40 erstrecken sich hier paarweise oberhalb und unterhalb eines Kanals 41, in dem der Läufer 29 horizontal linear beweglich geführt ist. Denkbar wäre aber auch ein Aufbau, bei dem Jeweils nur ein Magnetjoch 39,40 oberhalb oder unterhalb des Kanals 41 mit dem Läufer 29 interagiert. Die Magnetjoche 39,40 weisen im Wesentlichen Je einen C-förmigen Bügel auf, der an seinen Enden le zwei dem Kanal 41 zugewandte Polschuhe 42,43 bzw. 44,45 tragen. Die Polschuhe eines Polschuhpaars, 42 und 44 bzw. 43 und 45, liegen einander paarweise gegenüber, um im Spalt ein senkrecht zum Kanal 41 orientiertes Magnetfeld zu erzeugen. Wlrd alternativ ein einzelnes Magnetloch 39,40 mit einem Läufer 29 eingesetzt, so bildet sich ebenfalls ein senkrechtes Magnetfeld aus, wobei der Rückschluss des Magnetfeldes über den Läufer 29 stattfindet.

Um einen zentralen Abschnitt der Bügel der Magnetjoche 39,40 herum sind Spulen 46 des Stators 30 angeordnet. Bevorzugt sind die Spulen 46 parallel oder In Reihe so verschaltet, dass sie, wenn Strom führend, zusammen ein im Uhrzeiger- oder Gegenuhrzeigersinn orientiertes Magnetfeld In den Jochen 39,40 ausbilden. Im hier vorliegenden Ausführungsbeispiel Ist das sich zwischen dem Paar von sich gegenüberliegenden Polschuhen 42,44 ausbildende Magnetfeld zu dem Feld zwischen dem anderen Paar von gegenüberliegenden Polschuhen 43,45 entgegengesetzt.

Eine Achse der Spule 37 ist parallel zu den im Kanal 41 zwischen den Polschuhen 42,44 bzw. 43,45 erzeugten Magnetfeldern orientiert, so dass zwischen den Spulen 37,46 wirkende Magnetkräfte in Richtung des Kanals 41 wirken.

Wenn gleichzeitig mit den Spulen 46 des Stators 30 auch die Spule 37 des Läufers 29 bestromt ist, dann ist die Stromrichtung In ihren zwischen den Polschuhen 42,44 befindlichen linken Leitungsadern 35 der Spule 37 des Läufers 29 entgegengesetzt zu derjenigen der rechten Leitungsadern 36 der Spule 37 des Läufers 29 zwischen den Polschuhen 43,45, so dass auf die In den Leitungsadern 35,36 der Spule 37 des Läufers 29 fließenden Elektronen eine Lorentzkraft in jeweils gleicher Richtung wirkt und den Läufer 29 seitwärts ausienkt. Wenn der Läufer 29 sich ausgehend von der in Fig. 2a gezeigten Stellung nach links bewegt, nimmt die antreibende Lorentzkraft in dem Maße ab, in dem sich die Leitungsadern 35,36 aus den Zwischenräumen zwischen den Polschuhpaaren 42,44 bzw. 43,45 herausbewegen, während die Rückstellkraft der Rückstellfedern 32 und, mit Annäherung der rechten Leitungsadern 36 an das Polschuhpaar 42,44, auch eine nach rechts gerichtete Lorentzkraft zunimmt.

Wenn die Stromrichtung entweder in den Spulen 46 des Stators 30 oder In der Spule 37 des Läufers 29 invertiert wird, kehrt sich die Richtung der Lorentzkraft um, und der Läufer 29 wird nach rechts beschleunigt. Die Stromrichtung wird dabei nur in den Spulen 37,46 des Stators 30 oder des Läufer 29 invertiert. Die Spulen 46,37 des übrigen Läufers 29 bzw. Stators 30 weist beim Oszillieren des Läufers 29 vorzugsweise stets die gleiche Stromrichtung auf. Durch periodisches Invertieren der Stromrichtung im Läufer 29 wird der Läufer 29 bzw. die Messerleiste 11 oszillierend im Messerbalken 10 entlang des Schneidtisches 3 angetrieben. Jede Stromrichtung treibt den Läufer 29 somit in eine bestimmte Richtung an. Ein Wechsel der Stromrichtung führt zu einem Antrieb des Läufers 29 in die entgegengesetzte Richtung. Im Folgenden wird angenommen, dass der Läufer 29, genauer dessen Spule 37, die invertierende Stromrichtung und der Stator 30, genauer dessen Spule 46, die konstante Stromrichtung aufweist. Es liegt jedoch im Rahmen der Erfindung, dass stattdessen der Stator 30 die invertierende Stromrichtung und der Läufer 29 die konstante Stromrichtung aufweist.

Die Messerleiste 11 bildet mit den Rückstellfedern 32 ein schwingfählges System, dessen Resonanzfrequenz durch die Masse der Messerleiste 11, die Federkonstante der Rücksteilfedern 32 und eine Dämpfung, die die Messerleiste 11 beim Mähen des Ernteguts erfährt, bestimmt sind. Eine Frequenz, mit der die Stromrichtung invertiert wird, kann mit dieser Resonanzfrequenz übereinstimmen. Durch Änderung der Stromstärke kann hingegen eine Oszillationsgeschwindigkelt und/oder eine Oszillationsamplitude verändert werden.

Fig.2 (b) zeigt schematisch ein mögliches elektronisches Schaltbild des Linearantriebs 29. Andere gleichwirkende Verschaltungen und Konstruktionen liegen im Rahmen der Erfindung. Im hier vorliegenden Beispiel ist ein Wechselrichter 50 mit einer Gleichspannungsquelle 51 verbunden, bei der es sich um die Batterie des den Erntevorsatz tragenden Fahrzeugs, ein auf der Maschine vorhandenes Bordnetz beliebiger Spannung, oder ein aus dem Bordnetz durch DC/DC-Wandier generiertes Netz handeln kann. Der Wechselrichter 50 umfasst beispielsweise vier Leistungstransistoren T1 bis T4, die die Spule 37 des Läufers 29 speisen, sowie einen Leistungstransistoren T5 zum Speisen der Spulen 46 des Stators 30. Die Zuordnung der Leistungstransistoren ist willkürlich; denkbar wäre auch, die Spulen 46 des Stators 30 über die Leistungstransistoren T1 bis T4 und die Spule 37 des Läufers 29 über den Leistungstransistoren T5 elektrisch zu versorgen. Im Folgenden werden die Leistungstransistoren als Schalter bezeichnet. Ein Oszillator 52 liefert jeweils um 180° gegeneinander phasenversetzte Schaltimpulse L und R deren Frequenz und Tastverhältnis vom Fahrer des Erntefahrzeugs oder von der Steuer- und Regeleinheit 33 einstellbar sind. Die Frequenz der Schaltimpulse L, R gibt die Schwingfrequenz der Messerleiste 11 vor und ihr Tastverhältnis die Schneidkraft.

Wenn ein erster Schaltimpuls L am vierten Schalter T4 und, mit invertierter Polarität, am zweiten Schalter T2 anliegt, öffnen belde Schalter, während der erste und der dritte Schalter T1, T3 geschlossen bleiben, und Strom fließt in einer ersten Richtung durch die Spule 37 des Läufers 29. Der gleiche Schaltimpuls L öffnet auch den fünften Schalter T5, so dass auch die Spulen 46 des Stators 30 bestromt sind und die Lorentzkraft den Läufer 29 nach links auslenkt. Nach Ende des Schaltimpulses L sind die Spulen 37,46 stromlos, und der Läufer 29 bewegt sich ohne Krafteinbringung.

Durch einen Schaltimpuls R werden der erste und der dritte Schalter T1, T3 geöffnet, und die Spule 37 des Läufers 29 wird in einer zweiten Richtung, entgegengesetzt zur ersten, bestromt. Der Schaltimpuls R öffnet auch den fünften Schalter T5, so dass auch die Spulen 46 des Stators 30 wieder bestromt sind, doch ändert sich in diesen die Stromrichtung nicht, so dass auf den Läufer 29 eine Kraft nach rechts wirkt.

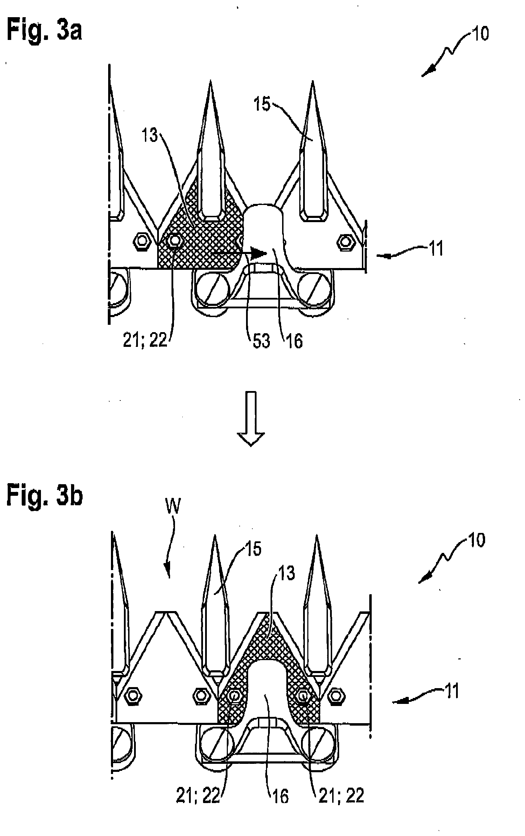

Fig. 3 (a) und (b) zeigen eine Ausgestaltungsform des Messerbalkens 10 in zwei Stellungen; und zwar in (a) In einer begrenzt zugänglichen Stellung und in (b) in einer Wartungsposition W. Zur graphischen Veranschaulichung einer Verschiebung 53 der Messerleiste 11 weist ein exemplarisch ausgewähltes Messer 13 in beiden Figuren ein Muster auf. In Flg. 3 (a) sind die Befestigungsvorrichtungen 21 zumindest teilweise unzugänglichen, da sie zum Beispiel teilweise durch die Niederhalter 16 verdeckt werden. Ein Lösen der verdeckten Befestigungsvorrichtungen 21 ist dann nicht oder nur erschwert möglich. Zudem befinden sich die Messer 13 in den Gegenschneiden 15 und können so nur erschwert nach einem Lösen der Befestigungsvorrichtungen 21 aus dem Messerbalken 10 entfernt werden. Fig. 3 (b) zeigt die Messerleisten 11 in der Wartungspositionen W. Durch Verschieben 53 der Messerleiste 11 in mindestens eine Wartungsposition W ist vorzugsweise ein, insbesondere einfacher, Austausch der Messer 13 möglich. Vorzugsweise sind dazu in der Wartungsposition W die Befestigungsvorrichtungen 21 der Messer 13 zugänglich und/oder die Entnahme der demontierten Messer 13 durch die Gegenschneiden 15 nicht blockiert. Somit Ist vorzugsweise eine vollständige Demontage/Montage der Messer 13 in der Wartungsposition 1 durchführbar.

In Abhängigkeit eines Messerbaikentyps, den Positionen der Befestigungsvorrichtungen 21, und/oder der Ausgestaltung der Niederhalter 16, der Messer 13 und/oder der Gegenschneiden 15 sind vorzugsweise weitere Wartungspositionen W für den Austausch der Messer 13 vorgesehen, bei welcher die Demontage und/oder Montage der Messer 13, welche in einer ersten Wartungsposition W baubedingt unvollständig durchführbar sein kann, abschließbar ist.

Vorzugsweise sind an beiden Enden des Läufers 29 des Linearantriebs 26 Rücksteilfedern 32 angeordnet. Die Rückstellfedern 32 sind mit ihrem anderen Ende bevorzugt am Schneidwerk 3 befestigt. Dabei sind sie derart angeordnet, dass Ihre Zug- und Dämpfungskräfte entgegengesetzt sind und entlang der Oszillationsrichtung des Läufers 29 ausgerichtet sind. Dadurch weist der Läufer 29 eine Neutralposition bei abgeschaltetem Linearantrieb 26 auf, bei dem sich ihre Druck- und Zugkräfte der Rückstellfedern 32 aufheben,

Vorzugsweise steuert die Steuer- und Regeleinheit 33 den elektrischen Antrieb 25 derart, dass die Messerleiste 11 in der gewünschten Jeweiligen Wartungsposition W stoppt und dort verbleibt. Dazu wird der Läufer 29 beschleunigt, Indem phasenversetzte Schaltimpuls L und R an die SchalterT1-T4 des Läufers 29 und an den Schalter T5 des Stators 30 gesendet werden. Bei Erreichung der Wartungsposition W wird der Läufer 29 vorzugsweise gebremst, indem die Stromrichtung In den Spulen 46 des Stators 30 umgekehrt wird, bis der Läufer 29 gestoppt Ist. Dabei wird vorzugsweise die Stromstärke In den Spulen 46 des Stators 30 von der Steuer- und Regeleinheit 33 reguliert. Im Falle einer Ausgestaltung des elektrischen Antriebes 25 ohne R0okstellfedern wird der elektrische Antrieb 25 nach Erreichen der Wartungsposition W vorzugsweise abgeschaltet. Sind dem Läufer 29 Rückstellfedern 32 angeordnet, so bleibt vorzugsweise ein Strom mit der umgekehrten Stromrichtung in der Spule 46 des Stator 30 und ein Strom in der Spule 37 des Läufers 29 bestehen, solange die Wartungsposition W gehalten werden soll. Dabei regelt die Steuer- und Regeleinheit 33 die Stromstärken Im Läufer 29 und Im Stator 30 derart ein, dass die Kraft des Magnetfeldes die Druck- und Zugkraft der Rücksteilfedern 32 in der jeweiligen Wartungsposition W ausgleicht. Vorzugsweise wird die Messerleiste 11 beim Abschalten des elektrischen Antriebes 25 automatisch In die Wartungsposition W gestellt.

Vorzugsweise weist das Schneidwerk 3 und/oder die selbstfahrende Erntemaschine mindestens ein Schaltelement auf, mit dem mindestens eine Wartungsposition W aktiviert werden kann. Alternativ oder zusätzlich ist das Schaltelement In eine mobile Fernbedienung Integriert,

Vorzugsweise ist der Linearantrieb 25 mit Rücksteilfedern 32 bevorzugt derart an der Messerleiste 11 angeordnet, dass der Läufer 29 bei abgeschaltetem Linearantrieb 26 die Wartungsposition W einnimmt. Dabei entspricht die Wartungsposition W vorzugsweise der Neutralposition des Läufers 29 mit Rücksteilfedern 32.

**Bezugszeichenliste**

| | | | |
|---|---|---|---|
| 1 | Schneidwerk | 53 | Verschiebung der Messerleiste |
| 2 | Trägerrahmen | T1 | Erster Leistungstransistor |
| 3 | Schneidtisch | T2 | Zweiter Leistungstransistor |
| 4 | Seitenwangen | T3 | Dritter Leistungstransistor |
| 5 | Querförderschnecke | T4 | Vierter Leistungstransistor |
| 6 | Vorderkante des Schneidtisches | T5 | Fünfter Leistungstransistor |
| 10 | Messerbalken | L | Erster Schaltimpuis |
| 11 | Messerleiste | R | Zweiter Schaltimpuls |
| 13 | Messer | W | Wartungsposition |
| 15 | Gegenschneiden | | |
| 16 | Niederhalter | | |
| 21 | Befestigungsvorrichtung | | |
| 22 | Schraubverbindung | | |
| 25 | Elektrischer Antrieb | | |
| 26 | Linearantrieb | | |
| 29 | Läufer | | |
| 30 | Stator | | |
| 31 | Beschläge | | |
| 32 | Rückstellfedern | | |
| 33 | Steuer- und Regeleinheit | | |
| 34 | Sensorsystem | | |
| 35 | Linke Leitungsadern der Spule des Läufers | | |
| 36 | Rechte Leitungsadern der Spule des Läufers | | |
| 37 | Spule des Läufers | | |
| 38 | Eisenkern | | |
| 39 | Erstes Magnetjoch | | |
| 40 | Zweites Magnetjoch | | |
| 41 | Kanal | | |
| 42 | Erster Polschuh | | |
| 43 | Zweiter Polschuh | | |
| 44 | Dritter Polschuh | | |
| 45 | Vierter Polschuh | | |
| 46 | Spulen des Stators | | |
| 50 | Wechselrichter | | |
| 51 | Gleichspannungsquelle | | |
| 52 | Oszillator | | |

## Patentansprüche

1. Selbstfahrende Erntemaschine mit einem angeordneten Schneidwerk (1) und einer Steuer- und Regeleinheit (33),
wobei das Schneidwerk (1) einen Messerbalken (10) zum Abtrennen von Pflanzen aufweist,
wobei jeder Messerbalken (10) mindestens eine Messerleiste (11) mit Messern (13) aufweist,
und die mindestens eine Messerleiste (11) mittels eines elektrischen Antriebes (25) angetrieben wird, so dass die Messerleiste (11) linear oszilliert,
**dadurch gekennzeichnet, dass**
die Steuer- und Regeleinheit (33) dazu eingerichtet ist, die mindestens eine Messerleiste (11) mittels des elektrischen Antriebes (25) in mindestens eine Wartungsposition (W) zu verschieben, in der die Messer (13) austauschbar sind.

2. Selbstfahrende Erntemaschine nach Anspruch 1,
**dadurch gekennzeichnet, dass**
die selbstfahrende Erntemaschine ein Mähdrescher und der elektrische Antrieb (25) ein Linearantrieb (26) ist.

3. Selbstfahrende Erntemaschine nach einem der vorhergehenden Ansprüche,
**dadurch gekennzeichnet, dass**
das Schneidwerk (1) ein Sensorsystem (34) zur Bestimmung einer Position und/oder eines Weges der Messerleiste (11) aufweist.

4. Selbstfahrende Erntemaschine nach Anspruch 3,
**dadurch gekennzeichnet, dass**
das Sensorsystem (34) mindestens einen Induktivsensor, einen fotoelektrischen Abtastsensor, und/oder einen magneto-elektrischen Abtastsensor umfasst.

5. Selbstfahrende Erntemaschine nach einem der vorhergehenden Ansprüche,
**dadurch gekennzeichnet, dass**
das Schneidwerk (1) ein Sensorsystem (34) zur Bestimmung der Beschleunigung der Messerleiste (11) aufweist.

6. Selbstfahrende Erntemaschine nach einem der vorhergehenden Ansprüche,
**dadurch gekennzeichnet, dass**
das Schneidwerk (1) ein Schalterelement zur Aktivierung der mindestens einen Wartungsposition (W) aufweist.

7. Selbstfahrende Erntemaschine nach einem der vorhergehenden Ansprüche,
**dadurch gekennzeichnet, dass**
der Linearantrieb (26) beidseitig Rückstellfedern (32) aufweist, und
der Linearantrieb (26) derart an der Messerleiste (11) angeordnet ist, dass der Läufer (29) bei abgeschaltetem Linearantrieb (26) die Wartungsposition (W) einnimmt.

## Claims

1. A self-propelled harvester comprising an arranged header (1) and an open-loop and closed-loop control unit (33),
wherein the header (1) has a cutter bar (10) for cutting off plants, wherein each cutter bar (10) has at least one blade bar (11) with blades (13)
and the at least one blade bar (11) is driven by means of an electric drive (25) so that the blade bar (11) oscillates linearly,
**characterised in that**
the open-loop and closed-loop control unit (33) is adapted to displace the at least one blade bar (11) by means of the electric drive (25) into at least one maintenance position (W) in which the blades (13) are replaceable.

2. A self-propelled harvester according to claim 1 **characterised in that** the self-propelled harvester is a combine harvester and the electric drive (25) is a linear drive.

3. A self-propelled harvester according to one of the preceding claims **characterised in that** the header (1) has a sensor system (34) for determining a position and/or a travel of the blade bar (11).

4. A self-propelled harvester according to claim 3 **characterised in that** the sensor system (34) includes at least one inductive sensor, a photoelectric scanning sensor and/or a magneto-electric scanning sensor.

5. A self-propelled harvester according to one of the preceding claims **characterised in that** the header (1) has a sensor system (34) for determining the acceleration of the blade bar (11).

6. A self-propelled harvester according to one of the preceding claims **characterised in that** the header (11) has a switch element for activating the at least one maintenance position (W).

7. A self-propelled harvester according to one of the preceding claims **characterised in that** the linear drive (26) has return springs (32) at both sides and the linear drive (26) is arranged on the blade bar (11) in such a way that the rotor (29) assumes the maintenance position (W) when the linear drive (26) is switched off.

## Revendications

1. Machine de récolte automotrice comprenant un tablier de coupe rapporté (1) et une unité de commande et de régulation (33), le tablier de coupe (1) comportant une barre porte-lames (10) pour sectionner des plantes, chaque barre porte-lames (10) comportant au moins un lamier (11) avec des couteaux (13), et le au moins un lamier (11) étant entraîné à l'aide d'un moyen d'entraînement électrique (25), de façon que le lamier (11) oscille linéairement, **caractérisée en ce que** l'unité de commande et de régulation (33) est agencée pour amener le au moins un lamier (11) à l'aide du moyen d'entraînement électrique (25) dans au moins une position de maintenance (W) dans laquelle les couteaux (13) sont échangeables.

2. Machine de récolte automotrice selon la revendication 1, **caractérisée en ce que** la machine de récolte automotrice est une moissonneuse-batteuse, et le moyen d'entraînement électrique (25) un moyen d'entraînement linéaire (26) .

3. Machine de récolte automotrice selon une des revendications précédentes, **caractérisée en ce que** le tablier de coupe (1) comporte un système de capteur (34) pour déterminer une position et/ou un trajet du lamier (11).

4. Machine de récolte automotrice selon la revendication 3, **caractérisée en ce que** le système de capteur (34) inclut au moins un capteur inductif, un capteur palpeur photoélectrique et/ou un capteur palpeur magnétoélectrique.

5. Machine de récolte automotrice selon une des revendications précédentes, **caractérisée en ce que** le tablier de coupe (1) comporte un système de capteur (34) pour déterminer l'accélération du lamier (11).

6. Machine de récolte automotrice selon une des revendications précédentes, **caractérisée en ce que** le tablier de coupe (1) comporte un élément de commutation pour activer la au moins une position de maintenance (W).

7. Machine de récolte automotrice selon une des revendications précédentes, **caractérisée en ce que** le moyen d'entraînement linéaire (26) comporte, de part et d'autre, des ressorts de rappel (32), et le moyen d'entraînement linéaire (26) est disposé sur le lamier (11) de façon que, lorsque le moyen d'entraînement linéaire (26) est hors circuit, l'induit (29) adopte la position de maintenance (W).
